# EUROPÄISCHE PATENTSCHRIFT

(11) **EP 2 745 753 B1**
(45) Veröffentlichungstag und Bekanntmachung des Hinweises auf die Patenterteilung: **29.05.2019**
(21) Anmeldenummer: 13197683.9
(22) Anmeldetag: 17.12.2013
(51) Int. Cl.: A47J 31/54

(54) **Filterkaffeemaschine**
Filter coffee machine
Machine à café filtre

(30) Priorität: 19.12.2012 DE 102012223861
(43) Veröffentlichungstag der Anmeldung: 25.06.2014
(73) Patentinhaber: BSH Hausgeräte GmbH, 81739 München (DE)
(72) Erfinder: Hoeck, Florian, 83313 Siegsdorf (DE); Nagl, Mathias, 83313 Siegsdorf (DE)

(56) Entgegenhaltungen:
- EP-A1- 1 949 825
- WO-A2-01/28294
- WO-A2-2004/062443
- CA-A- 1 186 360
- DE-A1- 2 813 684
- DE-C2- 3 830 633
- DE-T5-112004 000 252
- GB-A- 2 320 887
- US-A- 4 278 873

## Beschreibung

Die vorliegende Erfindung betrifft eine Filterkaffeemaschine mit einem Hauptschalter zum Einschalten der Kaffeemaschine, mit einer Heizeinheit und einem elektrisch steuerbaren Schaltelement. Die Erfindung betrifft außerdem ein Steuerungsverfahren für Filterkaffeemaschinen.

Filterkaffeemaschinen, wie z.B. aus der CA 1 186 360 A und der GB 2 320 887 A bekannt, besitzen typischerweise einen Hauptschalter zum Ein- und Ausschalten der Maschine. Die Kaffeemaschine bleibt solange zumindest in einem Stand-By-Betrieb, bis ein Benutzer sie am Hauptschalter endgültig von Energieversorgungsleitungen trennt.

Manche Filterkaffeemaschinen verfügen über zwei Heizstufen zur Erhitzung von unterschiedlichen Mengen an Zubereitungswasser, um beispielsweise die Kontaktzeit von Heißwasser mit Kaffeepulver zu beeinflussen. Dazu weisen sie häufig zwei separate Heizelemente auf, wobei ein erstes der Heizelemente z.B. ca. 600W Heizleistung zur Verfügung stellt und ein zweites mit z.B. ca. 500W Heizleistung hinzugeschaltet werden kann. Die beiden Heizstufen entsprechen einer Heizleistung von ca. 600W bzw. ca. 1100W. Die beiden Betriebsarten der Kaffeemaschine sind durch sogenannte Mengenwahlschalter oder Aromawahlschalter auswählbar. Separate Heizelemente stellen jedoch einen gewissen Kostenfaktor bei der Herstellung der Kaffeemaschine dar.

Aufgabe der vorliegenden Erfindung ist es, eine Filterkaffeemaschine und ein Verfahren zum Betrieb einer Kaffeemaschine bereitzustellen, die eine kostengünstige Herstellung der Kaffeemaschine mit gesteuerter Heizleistung einer Heizeinheit und definierter Ausgangsspannung eines Netzteils erlauben.

Diese Aufgabe wird mit Hilfe einer Kaffeemaschine nach Anspruch 1 und einem Verfahren zum Betrieb einer Kaffeemaschine nach Anspruch 8 gelöst. Erfindungsgemäß wird eine Filterkaffeemaschine mit einem Hauptschalter zum Einschalten der Kaffeemaschine vorgeschlagen, die einen Hauptstromkreis mit einer Heizeinheit und einem elektrisch steuerbaren Schaltelement aufweist. Als elektrisch steuerbares Schaltelement kann ein Thyristor oder bzw. eine Anordnung von Thyristoren, insbesondere ein Triac dienen. Der Hauptstromkreis ist mit Hilfe des elektrisch steuerbaren Schaltelements mit einem Energieversorgungsanschluss der Kaffeemaschine reversibel verbindbar. Die erfindungsgemäße Kaffeemaschine weist darüber hinaus eine Steuerungseinheit auf, die ein Signal zur Ansteuerung des elektrisch steuerbaren Schaltelements erzeugt. Die Steuerungseinheit kann beispielsweise ein µ-Controller sein, der mit Gleichstrom betrieben wird, und der an einem Ausgang einen Steuerstrom für den Thyristor erzeugt.

Mithilfe des elektrisch steuerbaren Schaltelements ist eine Reihe von Vorteilen erzielbar. So kann der Hauptstromkreis mit der Heizeinheit unabhängig von dem Hauptschalter mit Hilfe des elektrisch steuerbaren Schaltelements geschaltet und so eine Verbindung mit Energieversorgungsleitungen beispielsweise zu einem Wechselstromnetz hergestellt oder getrennt werden. Damit kann das Schaltwerk des Hauptschalters für erheblich geringere elektrische Leistungen und Ströme ausgelegt werden, als dies bei direkter Netztrennung des Hauptstromkreises mit Hilfe des Hauptschalters möglich wäre. Ferner kann so die Steuerungseinheit auch die direkte oder mittelbare Steuerung des Heizelements, insbesondere mit Hilfe des elektrisch steuerbaren Schaltelements übernehmen.

Die Aufgabe der Erfindung wird außerdem durch ein Steuerungsverfahren für Filterkaffeemaschinen der erfindungsgemäßen Art gelöst. Das Verfahren umfasst das Schließen des Hauptschalters und nachfolgend die Schritte:
- Verbinden des Hauptstromkreises mit Energieversorgungsleitungen mit Hilfe des elektrisch steuerbaren Schaltelements, insbesondere das Zünden eines Thyristors, bevorzugt mit Hilfe eines auf Basis des Hauptschalters erzeugten Steuersignals für den Thyristor;
- Aktivieren der Heizeinheit unter Nutzung des elektrisch steuerbaren Schaltelements, insbesondere des Thyristors ;
- Erhitzen einer definierten Menge an Zubereitungswasser für Kaffee durch die Heizeinheit;
- Erkennen des Zubereitungsendes der definierten Menge an Zubereitungs-wasser mit Hilfe eines Messsignals, insbesondere unter Nutzung der Steuerungseinheit;
- Beenden der Aktivierung des elektrisch steuerbaren Schaltelements, insbesondere des Zündens des Thyristors, auf Basis des Messsignals, bevorzugt unter Nutzung der erfindungsgemäßen Steuerungseinheit.

Gleichzeitig kann mit der Beendigung der Aktivierung des elektrisch steuerbaren Schaltelements auch die vollständige Abschaltung aller elektrischen Verbraucher der Kaffeemaschine verbunden sein, sodass keine Ruhestromaufnahme erfolgt.

Weitere vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie (z. B. des Verfahrens) auch analog zu den abhängigen Ansprüchen einer anderen Anspruchskategorie (z. B. der Vorrichtung) weitergebildet sein können.

Nach einer vorteilhaften Weiterbildung der Erfindung erzeugt der Hauptschalter ein Steuersignal zur Steuerung des elektrisch steuerbaren Schaltelements, auf dessen Basis das Einschalten der Kaffeemaschine erfolgt. Einschalten kann dabei insbesondere bedeuten, dass die Kaffeemaschine aus einem stromlosen Zustand, d.h. einem Zustand ohne Stromaufnahme aktiviert wird. Besonders vorteilhaft wird das Steuersignal ohne Nutzung der Steuereinrichtung erzeugt. Beispielsweise ist der Hauptschalter in einen Stromkreis integriert, der einen Steuerstrom oder eine Steuerspannung für das elektrisch steuerbare Schaltelement zur Verfügung stellt. Der Stromfluss in diesem Stromkreis kann wenigstens teilweise über Leitungsabschnitte geführt sein, die ebenfalls in dem Hauptstromkreis umfasst sind. Der Stromkreis kann dabei im Wesentlichen als Nebenstromkreis ausgebildet sein, d .h. eine überwiegende Anzahl von elektrischen Bauelementen des Stromkreises ist dabei auf Leitungsabschnitten angeordnet, die nicht dem Hauptstromkreis zuzurechnen sind. Somit ist es möglich, ein weiteres Steuersignal dem elektrisch steuerbaren Schaltelement unabhängig von der Steuereinheit zuführen, sodass die Aktivierung und bevorzugt auch der Betrieb des Hauptstromkreises unabhängig vom Aktivierungszustand der Steuereinheit durchgeführt werden kann. Beispielsweise kann so der Hauptstromkreises mit Energieversorgungsleitungen selbst bei deaktivierter Steuerungseinheit verbunden werden. Es ist deshalb insbesondere vorteilhaft, wenn das elektrisch steuerbare Schaltelement nicht in die Steuerungseinheit integriert ist, um den wenigstens zeitweise unabhängigen Betrieb der Steuerungseinheit und des elektrische steuerbaren Schaltelements zu ermöglichen. Die Erfindung schließt jedoch die integrierte Bauform von Steuerungseinheit und elektrisch steuerbarem Schaltelement nicht aus, um beispielsweise einen Kostenvorteil erzielen zu können.

Beispielsweise kann der Hauptschalter als Mikroschalter ausgebildet sein und bevorzugt in dem Nebenstromkreis angeordnet sein. Unter einem Mikroschalter ist zu verstehen, dass eine Luftstrecke zwischen Schaltkontakten des Mikroschalters einen Abstand von weniger als 3mm aufweist. Besonders bevorzugt ist der Mikroschalter als nicht rastender Taster ausgeführt, der nach einer kurzen Betätigungsphase selbständig wieder in eine Ausgangsstellung bzw. Normalstellung zurückkehrt. Dadurch, dass die Auslegung des Hauptschalters mit Hilfe der Erfindung auf die Eignung zur Weiterleitung und zum Schalten geringer elektrischer Leistungen bzw. geringer Ströme begrenzt werden kann, ist die kostengünstige Ausführung als Mikroschalter erstmals möglich. Die Ausbildung als selbstrückstellender Taster impliziert darüber hinaus, dass der Einschaltzustand der Kaffeemaschine unabhängig von der Schaltstellung des Mikroschalters, in sogenannter "Selbsthaltung" aufrechterhalten werden muss. In diesem Fall wird das Ausschalten der Kaffeemaschine unabhängig von dem Schaltzustand des Hauptschalters erfolgen, und zwar insbesondere unabhängig von der Betätigung des Hauptschalters durch den Benutzer. Bevorzugt erfolgt das Ausschalten der Kaffeemaschine dann unter Nutzung der Steuereinheit und Insbesondere unter Nutzung des elektrisch steuerbaren Schaltelements.

Erfindungsgemäß steuert die Steuerungseinheit das elektrisch steuerbare Schaltelement getaktet an. Die Taktrate liegt dabei immer über 5Hz. Getaktete Ansteuerung bedeutet, dass zwischen dem Einschalten der Kaffeemaschine und ihrem Ausschalten eine mehrmalige Änderung des Schaltzustandes des elektrisch steuerbaren Schaltelements erfolgt. Einerseits kann dadurch die Heizleistung der Heizeinheit insbesondere durch wiederholtes Verbinden und Trennen der Heizeinheit von den Energieversorgungsleitungen gesteuert werden. Andererseits kann durch die relativ hohe Taktrate zugleich die Energiezufuhr zu einem Netzteil zur Versorgung der Steuerungseinheit wiederholt so kurzzeitig unterbrochen werden, dass es dennoch betriebsfähig bleibt und eine definierte Ausgangsspannung zur Verfügung stellt. Indem durch Betätigen des elektrisch steuerbaren Schaltelements mit dieser hohen Taktrate die Energieabgabe an die Steuerungseinheit kontinuierlich aufrecht erhalten wird, wird erfindungsgemäß die sogenannte "Selbsthaltung" des Einschaltzustandes der Kaffeemaschine erreicht. Häufig weisen Netzteile, beispielsweise Kondensatornetzteile, entsprechende Speichereinheiten, wie beispielsweise Kondensatoren auf, um den Betrieb über kurzzeitige Unterbrechungen über wenige, in diesem Fall ca. zehn, Periodenlängen einer Wechselstromphase mit 50Hz fortsetzen zu können.

In einem Ausführungsbeispiel ist das Netzteil ebenfalls in dem Hauptstromkreis umfasst bzw. mit dem Hauptstromkreis direkt elektrisch verbunden. Die elektrische ansteuerbare Schalteinrichtung kann somit ebenfalls dazu verwendet werden, um die Verbindung des Netzteils zu Energieversorgungsanschlüssen der Kaffeemaschine zu steuern, sodass beispielsweise ein Aktvieren und ein Deaktivieren des Netzteils mit Hilfe der Schalteinrichtung möglich ist.

Wie bereits erwähnt, kann die Steuerungseinheit zur Steuerung der Heizleistung der Heizeinheit mittels Steuerung des elektrisch steuerbaren Schaltelements ausgebildet sein. Die Steuerung der Heizleistung kann dabei insbesondere durch Steuerung der Taktrate erfolgen, mit der das elektrisch steuerbare Schaltelement sein Schaltzustand ändert. Dabei erfolgt bevorzugt eine Auswahl von Halbphasen einer Versorgungsspannung, die unter Nutzung des elektrisch steuerbaren Schaltelements der Heizeinheit an die Heizeinheit weitergeleitet werden. Jedoch sind auch weitere Steuerungsmöglichkeiten denkbar, beispielsweise nach dem Phasenanschnittprinzip, nach dem Halbphasen gekappt an die Heizeinheit weitergeleitet werden.

Insbesondere kann zwischen mehreren Heizstufen mit unterschiedlicher Heizleistung umgeschaltet bzw. gewählt werden. Bei den Heizstufen kann es sich beispielsweise um die eingangs erwähnten beiden Heizstufen mit 600W und 1100W handeln, jedoch kann auch eine höhere Anzahl an Heizstufen wie beispielsweise drei oder mehr vorgesehen sein. Insbesondere kann mit Hilfe der Steuerung der Taktrate des elektrisch steuerbaren Schaltelements eine nahezu stufenlose Steuerung der Heizleistung erreicht werden. Die Steuerung kann dabei in Abhängigkeit von einer Gesamtbrühzeit erfolgen, die beispielsweise durch einen Aromawahlschalter bzw. Brühzeitverlängerungswahlschalter, also von einem Benutzer vorgegeben werden kann. Insbesondere kann die Steuerung auch in Abhängigkeit von der Zubereitungsmenge an Zubereitungswasser erfolgen. Dazu kann die Kaffeemaschine beispielsweise ein Mengenwahlschalter und/oder ein Füllmengenmesser zur Ermittlung der Zubereitungsmenge an Zubereitungswasser aufweisen. Damit kann nach Wahl des Benutzers ein gewünschtes Aroma des Kaffees auf kostengünstige Art sichergestellt werden.

Besonders vorteilhaft kann die Steuerungseinheit neben der Steuerung der Heizleistung auch zur Regelung der Heizleistung unter Nutzung des elektrisch steuerbaren Schaltelements ausgebildet sein, um beispielsweise das Aroma des zubereiteten Kaffees auf kostengünstige Art und Weise weiterhin zu verbessern.

Bevorzugt ist die Steuerungseinheit mit einer Signalleitung für ein Messsignal verbunden, das einen Heizstrom zum Betrieb der Heizeinheit repräsentiert. Zum Beispiel kann dieses Messsignal ein mit Hilfe eines in den Hauptstromkreis integrierten Widerstandes erzeugtes Spannungssignal sein. Das Spannungssignal kann zur Regelung der Heizleistung verwendet werden, da es beispielsweise ein Maß für die gegenwärtige Heizleistung der Heizeinheit sein kann.

Eine Weiterbildung des Steuerungsverfahrens für Filterkaffeemaschinen kann außerdem folgende Schritte umfassen:
- Aktivieren eines Netzteils zur Gleichstromversorgung der Kaffeemaschine durch Aktivieren des elektrisch steuerbaren Schaltelements, insbesondere durch Zünden des Thyristors;
- in Betrieb setzen der Steuereinrichtung der Kaffeemaschine mit Hilfe des elektrisch steuerbaren Schaltelements, beispielsweise durch Zünden des Thyris-tors, insbesondere unter Nutzung des Netzteils;
- Steuerung der Heizleistung der Heizeinheit mit Hilfe der Steuereinrichtung durch Steuerung von Aktivierungszeitpunkten des elektrisch steuerbaren Schaltelements, bevorzugt durch Steuerung von Zündzeitpunkten des Thyristors, insbesondere auf Basis von Benutzervorgaben.

Somit kann unter Nutzung des elektrisch steuerbaren Schaltelements, auch eine Steuereinrichtung in Betrieb gesetzt werden, welche die Steuerung der Heizleistung übernimmt.

In einer Weiterbildung der Erfindung ist die Steuerungseinheit dazu ausgebildet, auf Basis des Messsignals die Kaffeemaschine abzuschalten. Abschaltung kann insbesondere bedeuten, dass keine Ruhestromaufnahme erfolgt. Beispielsweise kann die Heizeinheit einen Temperaturregler umfassen, der bei Überschreiten einer Schwelltemperatur,+ die Stromzufuhr zu einem Heizelement der Heizeinheit unterbricht und bei Unterschreiten der Schwelltemperatur wieder herstellt. Als Temperaturregler eignet sich beispielsweise ein elektromechanischer Temperaturregler, insbesondere mit einem bimetallbasierten Schaltelement.

Das Überschreiten der Schwelltemperatur wird beispielsweise gehäuft auftreten, sobald das Zubereitungswasser vollständig der Filtereinrichtung zugeführt wurde. Das gehäufte, mehrmalige Ein- und Ausschalten des Heizelements in einer vorgegebenen Zeitspanne durch den Temperaturregler, d.h. ein "Takten" des Heizelements durch den Temperaturregler kann dann als Messsignal erfasst werden. Das Messsignal kann beispielsweise das bereits beschriebene mit Hilfe des Widerstands erzeugte Spannungssignal sein.

Die Erfindung wird im Folgenden anhand einer Zeichnung beispielshalber näher erläutert. In der Zeichnung zeigen:
- Figur 1:: einen schematischen den elektrischen Aufbau eines Ausführungsbeispiels der erfindungsgemäßen Filterkaffeemaschine,
- Figur 2:: eine schematische Darstellung der Ansteuerung des elektrisch steuerbaren Schaltelements durch Auswahl von Halbwellen einer Wechselstromversorgungsspannung mit Hilfe der Steuerungseinheit, so dass 40% der Halbwellen zur Heizung genutzt werden, und
- Figur 3:: ein Ansteuerschema für das elektrisch steuerbare Schaltelement, wobei 30% der maximalen Heizleistung erzielt werden.

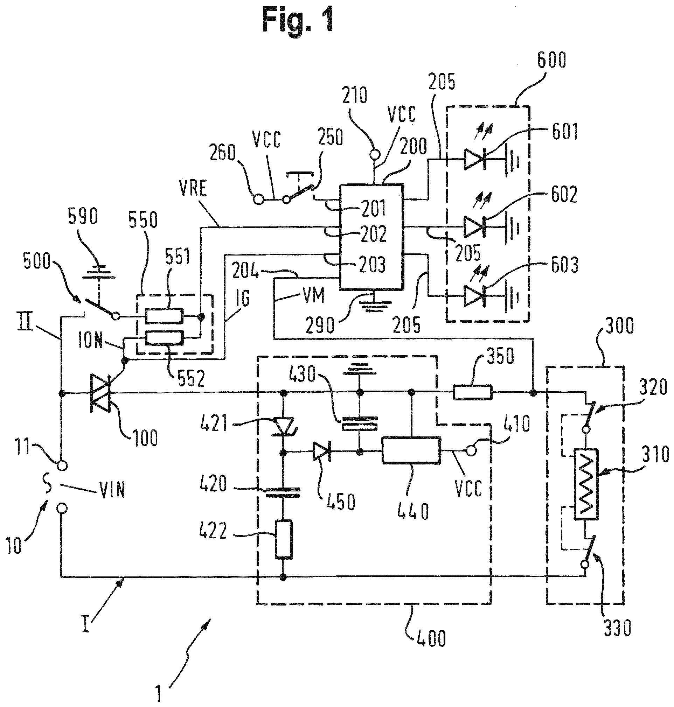

In Figur 1 ist schematisch und auszugsweise der elektrische Aufbau einer Filterkaffeemaschine dargestellt. Er umfasst einen Hauptstromkreis I mit zwei Polen eines Wechselstromanschlusses 10. An ihm liegt die übliche Wechselspannung VIN eines öffentlichen elektrischen Versorgungsnetzes an. Einer der Pole 11 ist über ein elektrisch steuerbares Schaltelement in Form eines Triacs 100 zeitweise und reversibel vom Hauptstromkreis I trenn- und mit ihm verbindbar. Im ausgeschalteten Zustand der Kaffeemaschine unterbricht der Triac 100 den Hauptstromkreis I, so dass der reversibel trennbare Pol 11 des Versorgungsnetzes vom Hauptstromkreis I separiert ist. Der Hauptstromkreis I ist so zumindest einphasig vom Versorgungsnetz getrennt.

Der Hauptstromkreis I enthält eine Heizeinheit 300, die zur Erhitzung von Zubereitungswasser dient. Ein Kondensatornetzteil 400 im Hauptstromkreis I stellt an einem Betriebsspannungsanschluss 410 eine Gleichspannung VCC zur Verfügung.

Ferner umfasst die Kaffeemaschine 1 einen Nebenstromkreis II mit einem Hauptschalter 500 in Form eines Mikroschalters zum Einschalten der Kaffeemaschine 1. Er ist als Taster ausgebildet, der selbstrückstellend sich unbetätigt in einer Normalposition befindet. Bei Betätigung nimmt er die in Figur 1 dargestellte Betätigungsposition ein. Bei dem Taster handelt es sich um einen Mikrowechselschalter. Der Nebenstromkreis II umfasst darüber hinaus den Pol 11, eine Widerstandsanordnung 550 sowie den Triac 100.

In der Normalstellung stellt der Hauptschalter 500 eine elektrische Verbindung des in dem Nebenstromkreis II umfassten Pols 11 mit dem Steueranschluss des Triacs 100 über die Widerstandsanordnung 550 her. Ein Ausgang des Triacs 100 ist direkt mit dem Pol 11 verbunden, sodass in Normalstellung des Hauptschalters 500 keine Potentialdifferenz zwischen dem besagten Ausgang des Triacs 100 und dessen Steuergate erzeugt wird. Wird nun der Hauptschalter 500 betätigt, stellt er in seiner Betätigungsposition über die Widerstandsanordnung 550 kurzzeitig die Verbindung des Steuergates mit einem Systemmassenanschluss 590 her. Der genannte Ausgang des Triacs 100 bleibt dabei weiterhin direkt mit dem Pol 11 verbunden. Die dabei erzeugte Potentialdifferenz zwischen dem Steuergate und dem Ausgang des Triacs 100 reicht aus, um einen Steuersignal ION in Form eines Steuerstroms zu erzeugen, der den Triac 100 zündet. Die Widerstandsanordnung 550 ist dabei so aufgebaut, dass der Strom zwischen dem Erdpotentialanschluss 590 und dem Pol 11 für den Triac 100 geeignete Steuerströme nicht überschreitet. Der Triac 100 wird somit während der Betätigungsdauer des Hauptschalters 500 leitend und es kann ein Stromfluss in dem Hauptstromkreis I über die Heizeinheit 300 erfolgen.

Das Kondensatornetzteil 400 im Hauptstromkreis I erhält durch den Betrieb des Hauptstromkreises I in dieser Zeit genügend Betriebsenergie, um aktiviert zu werden und die Gleichspannung VCC am Betriebsspannungsanschluss 410 zur Verfügung zu stellen.

Bei dem Netzteil 400 handelt es sich um Kondensator-Gleichspannungsnetzteil mit einem Hauptkondensator 420, einem damit in Reihe verbundenen Ladewiderstand 422 und einer ebenfalls in der Reihenschaltung umfassten Spannungsbegrenzungsdiode 421 in Form einer Z-Diode. Weiterhin umfasst das Netzteil 400 ein Pufferkondensator 430, einen Spannungswandler 440 und eine Diode 450. Die Diode 450 verbindet den Hauptkondensator 430 mit dem Pufferkondensator 430 und mit dem Spannungswandler 440. Der Ausgang des Spannungswandlers 440 bildet den Betriebsspannungsanschluss 410.

Mit Hilfe der Betriebsspannung VCC kann die Energieversorgung einer Steuereinrichtung 200 realisiert werden, die in diesem Fall als Mikrokontroller ausgebildet ist. Der Mikrokontroller 200 wird durch Anlegen der mit Hilfe des Kondensatornetzteils 400 erzeugten Betriebsspannung VCC an den Betriebsspannungsanschluss 210 des Mikrokontrollers 200 aktiviert. Ein weiterer Energieversorgungsanschluss 290 des Mikrokontrollers 200 liegt auf der Systemmasse. Somit erfolgt die Aktivierung bzw. das Einschalten der Steuereinheit 200 auf Basis der Steuerung des Triacs 100.

Ein Steueranschluss 203 des Mikrokontrollers 200 ist mit dem Steuergate des Triacs 100 direkt verbunden. Sobald der Mikrokontroller 200 betriebsbereit ist und die Betriebsspannung VCC einen stabilen Zustand erreicht hat, nimmt die Steuereinheit in Form des Mikrokontrollers 200 die Arbeit auf und beginnt unmittelbar mit der fortlaufenden Zündung des Triacs 100. Dadurch ist ein stabiler Zustand eingeleitet, der sowohl eine Selbsterhaltung insbesondere der Gleichstromversorgung mit Hilfe des Kondensatornetzteils 400 darstellt, als auch die Heizeinheit 300 mit maximaler Heizleistung ansteuert. Dabei werden alle am Versorgungsanschluss 10 zur Verfügung gestellten Halbwellen der Versorgungsspannung VIN zur Heizeinheit 300 weitergeleitet bzw. durchgeschaltet.

Darüber hinaus bietet die Kaffeemaschine 1 die Möglichkeit, durch Benutzereingaben das Aroma des Kaffees durch Steuerung der Brühzeit zu verändern. Ein Benutzer kann an einem Wählschalter 250 in Form eines nicht rückstellenden Tasters zwischen zwei unterschiedlichen Heizstufen wählen. Dabei wird die Heizeinheit 310 so gesteuert, dass in Abhängigkeit von der gewählten Heizstufe jeweils eine spezifische Menge an Zubereitungswasser pro Zeiteinheit auf eine vorgegebene Temperatur erhitzt wird. In einer ersten Stellung ist ein Wählschalteranschluss 201 des Mikrokontrollers 200 über den Wählschalter 250 mit einem Betriebsspannungsanschluss 260 verbunden, an dem die Gleichspannung VCC anliegt. Das so gebildete Spannungssignal wird vom Mikrokontroller 200 als Steuerungssignal interpretiert, das die Ansteuerung der Heizeinheit 300 mit beispielsweise 440W Heizleistung gemäß einer ersten Heizstufe auslöst. Eine maximale Heizleistung der Heizeinheit 300 beträgt bei Nutzung aller Halbwellen einer Versorgungsspannung beispielsweise 1100W.

Gemäß der ersten Heizstufe soll die Heizeinheit nun mit 40% der maximalen Heizleistung betrieben werden. Der Mikrokontroller 200 erzeugt dazu ein entsprechendes Steuersignal IG in Form eines Steuerstroms, der von dem Steueranschluss 203 über das Steuergate des Triacs 100 zu dem mit ihm verbundenen Pol 11 oder umgekehrt geleitet wird

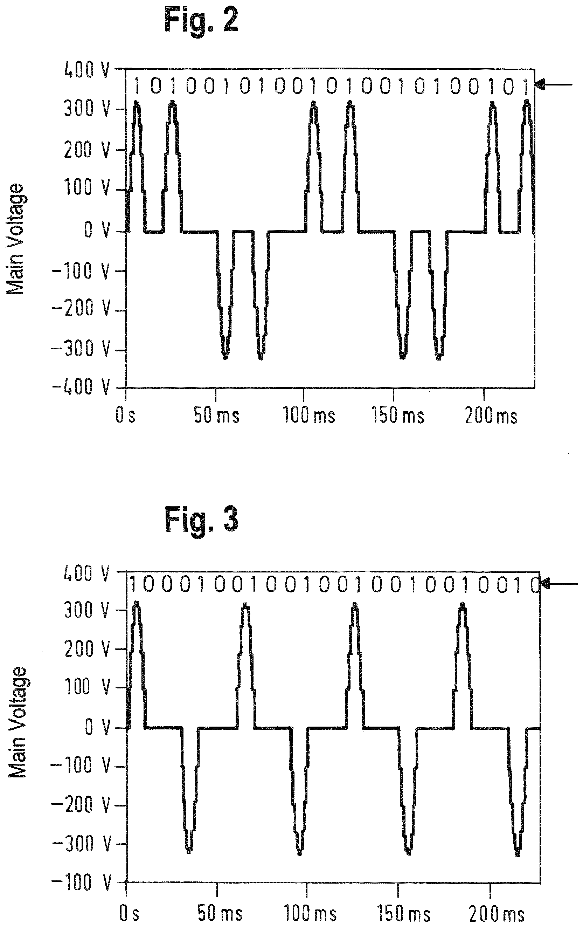

Wie erwähnt verbindet der Mikroschalter 500 in der Normalstellung über die Widerstandsanordnung 550 das Gate des Triacs 100 mit einem Ausgang des Triacs 100 und dem Pol 11. Die Widerstandsanordnung 550 ist als Spannungsteilerschaltung mit mehreren Widerständen 551, 552 ausgeführt, dessen Teilungspunkt direkt mit einem Phasendetektoranschluss 202 des Mikrokontrollers 200 verbunden ist. Der dem Teilungspunkt vorgeordnete Widerstand 551 dient der Strombegrenzung zu dem Phasendetektoranschluss 202, mit dem ein geringer Detektorstrom als Phasendetektorsignal VRE dem Phasendetektoranschluss 202 zugeführt wird. Somit ist der Mikrokontroller 200 dazu ausgebildet, auf Basis der mit Hilfe des Phasendetektoranschluss 202 ermittelten Phase der Versorgungsspannung VIN unter Nutzung des Steueranschlusses 203 Zündzeitpunkte des Triacs 100 zu steuern. Um beispielsweise eine Heizleistung von 40% der maximalen Heizleistung anzusteuern, könnte der Triac 100 beispielsweise wie in Figur 2 dargestellt angesteuert werden.

Figur 2 zeigt den zeitlichen Verlauf der Spannung, die der Heizeinheit 300 zugeführt wird. Die Ordinate gibt die Spannung wieder und die Abszisse den Zeitpunkt, zu dem die Spannung anliegt. Ein Pfeil markiert eine Repräsentation des Schaltzustands des Triacs 100 für jeweils eine von dem Mikrokontroller 200 detektierte Halbwelle der Versorgungsspannung VIN. Eine "1" bedeutet, dass der Triac 100 gezündet ist, eine "0", dass er ausgeschaltet - also nicht leitend ist. Die Taktrate des Zündens des Triacs 100 wird in der dargestellten Folge von Zündzeitpunkten zwischen ca. 17Hz und 25Hz variiert. Eine Möglichkeit, die Heizeinheit 300 beispielsweise mit 30% der möglichen Heizleistung durch Steuerung der Zündzeitpunkte des Triacs 100 zu betreiben, ist in Figur 3 dargestellt. Die Darstellung ist analog zu Figur 2 zu interpretieren. Die Taktrate des Zündens des Triacs 100 variiert zwischen ca. 12 Hz und 17 Hz.

Mit diesen Taktraten von mehr als 5 Hz, kann sichergestellt werden, dass das in Figur 1 gezeigte Kondensator-Gleichspannungsnetzteil 400 zur Erzeugung der Betriebsspannung des Mikrokontrollers 200 seinen Betrieb stabil fortsetzen kann. Gegebenenfalls kann das Netzteil 400 weitere Stabilisierungselemente umfassen, die dann auch den Betrieb mit anderen Taktraten der Zündzeitpunkte zulassen.

Der im Ausführungsbeispiel von in Figur 1 dargestellte Wählschalter 250 ermöglicht die Auswahl einer weiteren Heizstufe indem durch Betätigung des als Tasters ausgebildeten Wählschalters 250 unter mehreren voreingestellten Betriebmodi ausgewählt wird, woraufhin der Mikrokontroller 200 die Ansteuerung der Heizeinheit 300 auf Basis des ausgewählten Betriebsmodus durchführt. Dies kann beispielsweise einen Heizstufe anwählen, die 1100 W Heizleistung entspricht, und wobei alle Halbwellen, die mit Hilfe des Phasendetektoranschlusses 202 detektiert wurden, der Heizeinheit 300 zur Verfügung gestellt werden. D.h. der Triac 100 wird bei jeder detektierten Halbwelle gezündet. Alternativ sind noch weitere Schaltstellungen denkbar, die beispielsweise eine Heizstufe auswählen, die einer sogenannten Aromafunktion oder einer Entkalkungsfunktion entspricht.

Die unterschiedlichen Heizstufen bzw. Betriebsmodi der Kaffeemaschine können dem Benutzer mit Hilfe einer Anzeigeeinheit 600 kenntlich gemacht werden, die über Anzeigeanschlüsse 205 mit dem Mikrokontroller 200 verbunden ist. Die Anzeigeeinheit 600 umfasst mehrere LEDs 601, 602, 603, die in Kombination die gewählte Heizstufe und ggf. weitere Statusinformationen der Kaffeemaschine 1 darstellen.

Nach Erhitzen der vorgesehenen Menge an Zubereitungswasser und bei weiterer Zuführung von Heizstrom an die Heizeinheit 300 kann ein Heizelement 310 der Heizeinheit 300 eine vorgesehene Schwell- oder Grenztemperatur erreichen. Um einen sicheren Betrieb der Heizeinheit 300 zu gewährleisten, ist sie mit einem elektromechanischen Temperaturregler 320 und einem nicht rückstellenden Sicherungsmodul 330 ausgestattet. Das Sicherungsmodul 330 spricht an, falls ein bestimmter Heizstrom überschritten wird. Der Temperaturregler 320 schaltet das Heizelement 310 bei Erreichen bzw. Überschreiten der vorgesehenen Grenztemperatur ab. Dies führt zu intermittenter Abschaltung des Stromflusses durch das Heizelement 310 und damit durch den Hauptstromkreis I. In den Hauptstromkreis I ist in Reihe zu dem Heizelement 320 ein Shuntwiderstand 350 als Sensorelement geschaltet, das das intermittente Abschalten als Leistungsmesssignal VM in Form eines Spannungssignals einem Messsignalanschluss 204 des Mikrokontrollers 200 zuführt.

Der Mikrokontroller 200 ist somit einerseits in der Lage, die tatsächlich dem Heizelement 300 zugeführte Leistung zu ermitteln. So kann beispielsweise der Mikrokontroller 200 auch zu Regelung der Heizleistung verwendet werden.

Andererseits kann durch das Erfassen des intermittenten Abschaltens auch das Ende der Zubereitung der vorgesehenen Menge an Zubereitungswasser erkannt werden. Das Spannungssignal VM ist ein Indikator, ob noch Wasser im Tank und in der Heizeinheit 300 der Kaffeemaschine sind. Ist das Wasser verbraucht, d.h. die Heizeinheit 300 ist nicht mit Wasser gefüllt, beginnt die Temperaturregler 320/Sicherungsmodul 330- Kombination der Heizeinheit 300 zu arbeiten. Ein "Öffnen des Temperaturreglers 320", also die Unterbrechung des Stromflusses, indiziert somit das Ende der Brühung. Nach Erkennen des Endes der Zubereitung und einer ggf. weiteren vorgegebenen Zeitspanne beendet der Mikrokontroller 200 die Ansteuerung des Triacs 100. Damit wird auch die Energiezufuhr an das Netzteil 400 so unterbrochen, dass es keine Betriebsspannung VCC zur Verfügung stellt. Der Mikrokontroller 200 wird dadurch ebenfalls von der Energieversorgung getrennt, sodass die elektrischen Komponenten der Filterkaffeemaschine 1 keinen Ruhestrom mehr aufnehmen.

Die Erfindung stellt somit eine Reihe von Möglichkeiten zu Verfügung um beispielsweise einen kostengünstigen Hauptschalter 500 zu verwenden, auf kostengünstige Art und Weise die Steuerung der Heizleistung durchzuführen und die Ruhestromaufnahme der Kaffeemaschine nach Selbstabschaltung zu unterbinden. Insbesondere erfolgt dies durch synergetische Nutzung eines einzelnen elektrisch steuerbaren Schaltelements wie beispielsweise eines Triac 100.

Es wird abschließend darauf hingewiesen, dass es sich bei der vorhergehend detailliert beschriebenen Filterkaffeemaschine und dem Verfahren zu ihrem Betrieb lediglich um Ausführungsbeispiele handelt, die vom Fachmann in verschiedenster Weise modifiziert werden können, ohne den Bereich der Erfindung zu verlassen. Außerdem schließt die Verwendung der unbestimmten Artikel "ein" bzw. "eine" nicht aus, dass die betreffenden Merkmale auch mehrfach bzw. mehrmals vorhanden sein können. Ebenso schließt der Begriff "Einheit" sowie "Modul" nicht aus, dass die betreffenden Komponenten aus mehreren zusammenwirkenden Teil-Komponenten bestehen, die gegebenenfalls auch räumlich verteilt sein können.

### Bezugszeichenliste

10 Energieversorgungsanschluss
11 Pol des Energieversorgungsanschlusses
100 elektrisch steuerbares Schaltelement/TRIAC
200 Steuerungseinrichtung/Mikrokontroller
201 Wählschalteranschluss
202 Phasendetektoranschluss
203 Steueranschluss
204 Messsignalanschluss
205 Anzeigeanschluss
210 Betriebsspannungsanschluss/Gleichstromanschluss
250 Wählschalter
260 Betriebsspannungsanschluss/Gleichstromanschluss
290 Systemmassenanschluss
300 Heizeinheit
310 Heizelement/Heizplatte
320 Temperaturregler
330 Sicherungsmodul
350 Sensorelement/Shunt
400 Kondensator-Netzteil
410 Betriebsspannungsanschluss/Gleichstromanschluss
420 Hauptkondensator
421 Spannungsbegrenzungsdiode
422 Ladewiderstand
430 Pufferkondensator
440 Spannungsregler
450 Gleichrichterdiode
490 Erdpotentialanschluss
500 Hauptschalter/Mikroschalter
550 Widerstandsanordnung
551, 552 Widerstand
590 Systemmassenanschluss
600 Anzeigeeinheit
601, 602, 603 LED
690 Erdungspotentialanschluss
IG Steuersignal
VCC Gleichspannung/Betriebsspannung
IG Steuersignal
VIN Versorgungsspannung/Wechselspannung
VM Leistungsmessignal
VRE Phasenmessignal

## Patentansprüche

1. Filterkaffeemaschine (1) umfassend
- einen Hauptschalter (500) zum Einschalten der Kaffeemaschine,
- einen Hauptstromkreis (I) mit einer Heizeinheit (300) und einem elektrisch steuerbaren Schaltelement (100),
- wobei der Hauptstromkreis (I) mit Hilfe des elektrisch steuerbaren Schalt-elements (100) mit einem Energieversorgungsanschluss (10) der Kaffeemaschine (1) verbindbar ist, und
- wobei die Kaffeemaschine eine Steuerungseinheit (200) aufweist, die ein Signal (IG) zur Ansteuerung des elektrisch steuerbaren Schaltelements (100) erzeugt,
**dadurch gekennzeichnet, dass** die Steuerungseinheit (200) das elektrisch steuerbare Schaltelement (100) getaktet ansteuert, wobei die Taktrate über 5Hz liegt, um eine Selbsthaltung des Einschaltzustandes der Kaffeemaschine zu erreichen.

2. Kaffeemaschine (1) nach Anspruch 1, **dadurch gekennzeichnet, dass** der Hauptschalter (500), bevorzugt in Form eines Tasters, ein Steuersignal (ION) zur Steuerung des elektrisch steuerbaren Schaltelements (100) erzeugt, auf dessen Basis das Einschalten der Kaffeemaschine erfolgt.

3. Kaffeemaschine (1) nach einem der Ansprüche 1 bis 2, **dadurch gekennzeichnet, dass** die Steuerungseinheit (200) zur Steuerung und/oder Regelung der Heizleistung der Heizeinheit (300), mittels Steuerung des elektrisch steuerbaren Schaltelements (100) ausgebildet ist.

4. Kaffeemaschine (1) nach einem der Ansprüche 1 bis 3, **dadurch gekennzeichnet, dass** die Steuerungseinheit (200) mit einer Signalleitung für ein Messsignal (VM) verbunden ist, welches einen Heizstrom zum Betrieb der Heiz-einheit repräsentiert.

5. Kaffeemaschine (1) nach Anspruch 4, **dadurch gekennzeichnet, dass** die Steuerungseinheit (100) dazu ausgebildet ist, auf Basis des Messsignals (VM) die Kaffeemaschine (1) abzuschalten.

6. Kaffeemaschine (1) nach einem der Ansprüche 4 oder 5, **dadurch gekennzeichnet, dass** das Messsignal (VM) ein mit Hilfe eines in den Hauptstromkreis (I) integrierten Widerstandes (350) erzeugtes Spannungssignal ist.

7. Kaffeemaschine (1) nach einem der Ansprüche 1 bis 6, **dadurch gekennzeichnet, dass** der Hauptschalter (500) ein Mikroschalter ist, der in einem Nebenstromkreis (II) angeordnet ist.

8. Steuerungsverfahren für Filterkaffeemaschinen nach einem der Ansprüche 1 bis 7, umfassend einen Hauptschalter (500), einen Thyristor (100) und eine Heizeinheit (300), **dadurch gekennzeichnet, dass** nach Betätigung des Hauptschalters die folgenden Verfahrensschritte erfolgen:
a) Zünden des Thyristors mit Hilfe eines auf Basis des Hauptschalters er-zeugten Steuersignals (ION) für den Thyristor (100);
b) Aktivieren der Heizeinheit (300) unter Nutzung des Thyristors (100);
c) Erhitzen einer definierten Menge an Zubereitungswasser unter Nutzung der Heizeinheit (300);
d) Erkennen des Zubereitungsendes mit Hilfe eines Messsignals;
e) Beenden des Zündens des Thyristors auf Basis dieses Messsignals.

9. Steuerungsverfahren für Filterkaffeemaschinen nach Anspruch 8, **dadurch gekennzeichnet, dass** das Verfahren nach Schritt a) weiterhin folgende Schritte umfasst:
- in Betrieb setzen einer Steuereinrichtung (200) der Kaffeemaschine durch Zünden des Thyristors, und/oder
- Steuerung der Heizleistung der Heizeinheit (300) mit Hilfe der Steuereinrichtung (200) durch Steuerung von Zündzeitpunkten des Thyristors auf Basis von Benutzervorgaben.

## Claims

1. Filter coffee machine (1) comprising
- a main switch (500) for switching on the coffee machine,
- a main current circuit (I) with a heating unit (300) and an electrically controllable switching element (100),
- wherein the main current circuit (I) can be connected to a power supply connection (10) of the coffee machine (1) with the aid of the electrically controllable switching element (100), and
- wherein the coffee machine has a control unit (200), which generates a signal (IG) for activating the electrically controllable switching element (100),
**characterised in that** the control unit (200) controls the electrically controllable switching element (100) in a clocked manner, wherein the clock rate is above 5Hz in order to reach a lock of the switch-on state of the coffee machine.

2. Coffee machine (1) according to claim 1, **characterised in that** the main switch (500), preferably in the form of a button, generates a control signal (ION) for controlling the electrically controllable switching element (100), on the basis of which the coffee machine is switched on.

3. Coffee machine (1) according to one of claims 1 to 2, **characterised in that** the control unit (200) is embodied to control and/or regulate the heating output of the heating unit (300), by means of controlling the electrically controllable switching element (100).

4. Coffee machine (1) according to one of claims 1 to 3, **characterised in that** the control unit (200) is connected to a signal line for a measuring signal (VM), which represents a heating current for operating the heating unit.

5. Coffee machine (1) according to claim 4, **characterised in that** the control unit (100) is embodied to switch the coffee machine (1) off on the basis of the measuring signal (VM).

6. Coffee machine (1) according to one of claims 4 or 5, **characterised in that** the measuring signal (VM) is a voltage signal generated with the aid of a resistor (350) integrated into the main current circuit (I).

7. Coffee machine (1) according to one of claims 1 to 6, **characterised in that** the main switch (500) is a microswitch, which is arranged in a branch circuit (II).

8. Control method for filter coffee machines according to one of claims 1 to 7, comprising a main switch (500), a thyristor (100) and a heating unit (300), **characterised in that**, after the main switch is actuated, the following method steps ensue:
a) triggering the thyristor with the aid of a control signal (ION) generated on the basis of the main switch for the thyristor (100);
b) activating the heating unit (300) using the thyristor (100);
c) heating a defined quantity of percolation water using the heating unit (300);
d) identifying the end of percolation with the aid of a measuring signal;
e) ending the triggering of the thyristor on the basis of this measuring signal.

9. Control method for filter coffee machines according to claim 8, **characterised in that** the method according to step a) also comprises the following steps:
- setting a control device (200) of the coffee machine to operate by triggering the thyristor, and/or
- controlling the heating output of the heating unit (300) with the aid of the control device (200) by controlling trigger time instants of the thyristor on the basis of user specifications.

## Revendications

1. Machine à café filtre (1) comprenant
- un commutateur principal (500) pour mettre la machine à café sous tension,
- un circuit principal (I) avec une unité de chauffe (300) et un élément de commutation à commande électrique (100),
- ce circuit principal (I) pouvant être raccordé, à l'aide de l'élément de commutation à commande électrique (100), à une prise d'alimentation en énergie (10) de la machine à café (1), et
- cette machine à café présentant une unité de commande (200) produisant un signal (IG) amorçant l'élément de commutation à commande électrique (100),
**caractérisée en ce que** cette unité de commande (200) amorce l'élément de commutation à commande électrique (100) de manière cadencée, le taux de cadence se situant au-dessus de 5 Hz pour atteindre un maintien automatique de l'état sous tension de la machine à café.

2. Machine à café (1) selon la revendication 1, **caractérisée en ce que** le commutateur principal (500), de préférence sous forme d'une touche, produit un signal de commande (ION) pour commander l'élément de commutation à commande électrique (100) sur base duquel la machine à café se met sous tension.

3. Machine à café (1) selon l'une des revendications 1 à 2, **caractérisée en ce que** l'unité de commande (200) est réalisée pour la commande et/ou le réglage de la puissance de chauffe de l'unité de chauffe (300), au moyen de la commande de l'élément de commutation à commande électrique (100).

4. Machine à café (1) selon l'une des revendications 1 à 3, **caractérisée en ce que** l'unité de commande (200) est raccordée à un circuit de signalisation pour un signal de mesure (VM), lequel représente un courant de chauffe pour le fonctionnement de l'unité de chauffe.

5. Machine à café (1) selon la revendication 4, **caractérisée en ce que** l'unité de commande (100) est réalisée pour mettre la machine à café (1) hors tension sur base du signal de mesure (VM).

6. Machine à café (1) selon l'une des revendications 4 ou 5, **caractérisée en ce que** le signal de mesure (VM) est un signal de tension produit à l'aide d'une résistance (350) intégrée au circuit principal (I).

7. Machine à café (1) selon l'une des revendications 1 à 6, **caractérisée en ce que** le commutateur principal (500) est un microcommutateur disposé dans un circuit de dérivation (II).

8. Procédé de commande pour machines à café filtre selon l'une des revendications 1 à 7, comprenant un commutateur principal (500), un thyristor (100) et une unité de chauffe (300), **caractérisé en ce qu'**après l'actionnement du commutateur principal, les étapes suivantes s'effectuent:
a) allumage du thyristor à l'aide d'un signal de commande (ION) produit sur base du commutateur principal pour le thyristor (100);
b) activation de l'unité de chauffe (300) en utilisant le thyristor (100);
c) chauffage d'une quantité définie d'eau préparée en utilisant l'unité de chauffe (300);
d) reconnaissance de la fin de la préparation à l'aide d'un signal de mesure;
e) fin de l'allumage du thyristor sur base de ce signal de mesure.

9. Procédé de commande pour machines à café filtre selon la revendication 8, **caractérisé en ce que** ce procédé comprend, après l'étape a), en outre les étapes suivantes:
- mise en fonctionnement d'un dispositif de commande (200) de la machine à café par allumage du thyristor, et/ou
- commande de la puissance de chauffe de l'unité de chauffe (300) à l'aide du dispositif de commande (200) par commande de moments d'allumage du thyristor sur base des instructions d'utilisateur.
